# EUROPÄISCHE PATENTSCHRIFT

(11) **EP 3 448 725 B1**
(45) Veröffentlichungstag und Bekanntmachung des Hinweises auf die Patenterteilung: **05.01.2022**
(21) Anmeldenummer: 17701866.0
(22) Anmeldetag: 27.01.2017
(51) Int. Cl.: B60R 25/24, E05F 15/76, E05F 15/77, G07C 9/00

(54) **VERFAHREN, SYSTEM UND FAHRZEUG UMFASSEND DAS SYSTEM ZUM AUTOMATISCHEN AUSLÖSEN EINER FAHRZEUGFUNKTION EINES FAHRZEUGS**
METHOD, SYSTEM, AND VEHICLE COMPRISING THE SYSTEM FOR AUTOMATIC INITIATION OF A VEHICLE FUNCTION OF A VEHICLE
PROCÉDÉ, SYSTÈME ET VÉHICULE COMPORTANT LE SYSTÈME POUR LE DÉCLENCHEMENT AUTOMATIQUE D'UNE FONCTION D'UN VÉHICULE

(30) Priorität: 12.04.2016 DE 102016206067
(43) Veröffentlichungstag der Anmeldung: 06.03.2019
(73) Patentinhaber: Bayerische Motoren Werke Aktiengesellschaft, 80809 München (DE)
(72) Erfinder: HEINBOCKEL, Stefan, 81735 München (DE); ABINGER, Gabriele, 85716 Unterschleißheim (DE); KLATTIG, Thomas, 82380 Peißenberg (DE); WISTORF, Ralf, 81737 München (DE)
(86) Internationale Anmeldenummer: PCT/EP2017/051742
(87) Internationale Veröffentlichungsnummer: WO 2017/178124

(56) Entgegenhaltungen:
- EP-A1- 2 657 092
- EP-A1- 2 962 910
- WO-A1-2013/072489
- WO-A1-2014/086763
- US-A1- 2007 162 191

## Beschreibung

Die Erfindung betrifft ein Verfahren zum automatischen Auslösen einer Fahrzeugfunktion eines Fahrzeugs, sowie ein System zum automatischen Auslösen der Fahrzeugfunktion des Fahrzeugs und ein Fahrzeug umfassend das System.

Fahrzeuge können ein automatisches System enthalten, mit dem ein Fahrzeug ohne eine aktive Benutzung eines Fahrzeugschlüssels entriegelt oder verriegelt werden kann. Wenn ein Fahrzeugbenutzer sich mit einem Fahrzeugschlüssels dem Fahrzeug annähert, kann das Fahrzeug automatisch entriegelt werden. Wenn ein Fahrzeugbenutzer sich mit dem Fahrzeugschlüssel von dem Fahrzeug entfernt, kann das Fahrzeug automatisch verriegelt werden. Bekannte Systeme entriegeln bzw. verriegeln das Fahrzeug jedoch auch, wenn ein Fahrzeugbenutzer an dem Fahrzeug vorbeiläuft, ohne das Fahrzeug nutzen zu wollen.

EP 2 962 910 A1 beschreibt ein elektronisches Schlüsselgerät, das ein portables Gerät umfasst, und ein an einem Fahrzeug angebrachtes Gerät, das eine Kommunikation mit portablen Gerät ausführen kann, um eine vorgegebene Steuerung auszuführen. Das am Fahrzeug angebrachte Gerät um fasst eine Vielzahl von Antennen an verschiedenen Positionen des Fahrzeugs. Das am Fahrzeug angebrachte Gerät bestimmt, dass eine Bewegungsrichtung des portablen Geräts in Richtung einer der Antennen zeigt und, wenn eine Distanz zwischen dem Fahrzeug und dem portablen Gerät einer vorgegeben Distanz entspricht oder diese unterschreitet, führt eine Steuerung aus, um eine Tür einen Fahrzeugs zu entsperren.

WO 2013/072489 A1 beschreibt eine Zugangseinheit, die mit einer weiteren Zugangseinheit kommuniziert, um einen Zugang zu einem Fahrzeug zu steuern.

WO 2014/086763 A1 beschreibt ein Verfahren zum Öffnen einer Tür eines Fahrzeugs.

Es ist daher eine Aufgabe der Erfindung, ein automatisches Auslösen von Fahrzeugfunktionen zu verbessern. Insbesondere ist es eine Aufgabe der Erfindung eine Anzahl von automatisch ausgelösten Fahrzeugfunktionen effizient zu reduzieren.

Gelöst wird diese Aufgabe durch die Merkmale der unabhängigen Ansprüche. Vorteilhafte Ausgestaltungen und Weiterbildungen der Erfindung ergeben sich aus den abhängigen Ansprüchen.

Gemäß einem Aspekt zeichnet sich die Erfindung aus durch ein Verfahren zum automatischen Auslösen einer Fahrzeugfunktion eines Fahrzeugs. Das Verfahren umfasst ein Ermitteln eines ersten Ortes eines Objekts zu einem ersten Zeitpunkt in einem Umfeld eines Fahrzeugs, ein Ermitteln eines zweiten Ortes des Objekts zu einem zweiten Zeitpunkt in dem Umfeld des Fahrzeugs, und ein Berechnen eines Bewegungsvektors in Abhängigkeit des ermittelten ersten Ortes des Objekts zu dem ersten Zeitpunkt und des ermittelten zweiten Ortes des Objekts zu dem zweiten Zeitpunkt. Ein Objekt kann ein Fahrzeugschlüssel, ein Smart-Device, z.B. ein Smartphone, eine Smart-Watch, eine Smartcard, oder eine Augmented-Reality-Brille, und/oder ein drahtloses Kommunikationsgerät sein, welches mit einer Drahtlosschnittstelle eines Fahrzeugs kommunizieren kann. Eine Fahrzeugfunktion kann einen Öffnen bzw. Schließen eines Fahrzeugzugangs, z.B. eine Fahrzeugtür, eine Heckklappe, eine Frontklappe, ein Tankdeckel, eine Motorhaube, und/oder ein Fenster des Fahrzeugs, ein Auslösen eines oder mehrerer visuellen Signale, Audiosignale, und/oder audiovisuelle Signale des Fahrzeugs umfassen. Beispielsweise können Lichter und/oder Lichtleisten des Fahrzeugs aktiviert oder deaktiviert werden und/oder ihre Intensität und/oder Farbe ändern. Beispielweise können Anzeigegeräte im Innenbereich und/oder im Außenbereich des Fahrzeugs Informationen, insbesondere wechselnde Informationen, anzeigen. Das Verfahren umfasster ferner ein Bestimmen eines Schnittpunkts zwischen dem Bewegungsvektor und einem virtuellen Fahrzeugbereich, wobei der virtuelle Fahrzeugbereich mindestens teilweise einem realen Fahrzeugbereich des Fahrzeugs entspricht. Vorzugsweise ist der virtuelle Fahrzeugbereich rechteckig und umfasst vollständig den realen Fahrzeugbereich. Beispielsweise kann der virtuelle Fahrzeugbereich identisch mit den Außenmaßen des Fahrzeugs sein. Beispielsweise kann der virtuelle Fahrzeugbereich Konturen des Fahrzeugs abbilden. Der reale Fahrzeugbereich kann eine Länge und eine Breite des Fahrzeugs umfassen. Der reale Fahrzeugbereich kann einer realen Größe des Fahrzeugs entsprechen. Falls ein Schnittpunkt zwischen dem Bewegungsvektor und einem virtuellen Fahrzeugbereich vorhanden ist bzw. falls ein Schnittpunkt zwischen dem Bewegungsvektor und einem virtuellen Fahrzeugbereich bestimmt werden konnte, umfasst das Verfahren ein Auslösen einer Fahrzeugfunktion des Fahrzeugs. Das Auslösen der Fahrzeugfunktion kann beispielsweise von einem Steuergerät des Fahrzeugs ausgelöst werden, welches z.B. nach einem Identifizieren und/oder Authentifizieren des Objekts eine entsprechende Fahrzeugfunktion ausführt.

Vorteilhafterweise kann eine Absicht eines Nutzers des Fahrzeugs, sich dem Fahrzeug zu nähern oder an dem Fahrzeug vorbeizugehen, besser erkannt werden, so dass ein unnötiges Auslösen von Fahrzeugfunktionen vermieden werden kann. Dadurch kann die Sicherheit eines Fahrzeugzugangs verbessert werden, indem beispielsweise eine Fahrzeugfunktion wie das Entsperren einer Fahrzeugtür nur ausgelöst wird, wenn erkannt wird, dass der Nutzer des Fahrzeugs, der das Objekt bei sich trägt, sich zu dem Fahrzeug hinbewegt, d.h. der Bewegungsvektor einen Schnittpunkt mit dem virtuellen oder realen Fahrzeugbereich bildet. Durch ein Vermeiden des Auslösens bzw. Ausführens von Fahrzeugfunktionen kann ferner Energie, die mit dem Auslösen der Fahrzeugfunktion verbunden ist, gespart werden. Die Energie des Objekts sowie des Fahrzeug kann somit effizienter genutzt werden, was sich beispielsweise in einer verlängerten Nutzungsdauer des Objekts und/oder des Fahrzeug ohne erneute Energiezufuhr niederschlagen kann. Ferner können Fahrzeugfunktionen proaktiv ausgelöst werden, so dass mögliche Verzögerungen beim Auslösen von Fahrzeugfunktionen vermieden werden.

Gemäß einer vorteilhaften Ausgestaltung kann die Fahrzeugfunktion durch das Objekt, und/oder in Abhängigkeit einer Position des Schnittpunkts mit dem virtuellen Fahrzeugbereich ausgelöst werden. Hiermit kann eine Fahrzeugfunktion effizient durch ein Objekt und/oder durch den Schnittpunkt bestimmt werden.

Gemäß einer weiteren, vorteilhaften Ausgestaltung kann der erste Ort des Objekts und/oder der zweite Ort des Objekts relativ zu einer Position des Fahrzeugs ermittelt werden, und/oder der erste Ort des Objekts und/oder der zweite Ort des Objekts relativ zu dem virtuellen Fahrzeugbereich des Fahrzeugs ermittelt werden. Hiermit kann der Ort bzw. die Position des Objekts flexibel zur Position des Fahrzeugs bestimmt werden.

Gemäß einer weiteren, vorteilhaften Ausgestaltung kann die Fahrzeugfunktion in Abhängigkeit des ersten Ortes des Objekts und/oder in Abhängigkeit des zweiten Ortes des Objekts ausgelöst werden. Hiermit kann eine Fahrzeugfunktion flexibel anhand des Ortes bzw. anhand der Bewegung zwischen den Orten bestimmt und ausgelöst werden.

Gemäß der Erfindung umfasst das Ermitteln des ersten Ortes des Objekts und/oder des zweiten Ortes des Objekts in dem Umfeld des Fahrzeugs: ein Senden eines Anfrage-Funksignals an das Objekt und, falls das Objekt in dem Umfeld des Fahrzeugs ist, ein Empfangen eines Antwort-Funksignals des Objekts, ein Ermitteln eines Merkmalsvektors in Abhängigkeit des Antwort-Funksignals, wobei der Merkmalsvektor wenigstens eine physikalische Eigenschaft des Antwort-Funksignals und/oder des Anfrage-Funksignals umfasst, ein Bestimmen eines oder mehrerer Merkmalsvektoren aus einer Menge vorgegebener, eindeutiger Merkmalsvektoren in Abhängigkeit des ermittelten Merkmalsvektors, wobei ein Merkmalsvektor aus der Menge vorgegebener Merkmalsvektoren mit einem eindeutigen Ort in einem vorgegebenen Raster im Umfeld des Fahrzeugs verknüpft ist, und ein Setzen eines Ortes des Objekts als den Ort, der mit dem bestimmten Merkmalsvektor verknüpft ist. Hiermit kann effizient der Ort des Objekts ermittelt werden.

Beispielsweise können das Anfrage-Funksignal und/oder das Antwort-Funksignal Signale einer Schlüsselsuche des Fahrzeugs sein. Beispielsweise können die Signale standardisiert sein, um einen bereiten Anwendungsbereich zu ermöglichen. Beispielsweise können das Anfrage-Funksignal und/oder das Antwort-Funksignal Signale einer Nahfeldkommunikationsschnittstelle, z.B. Near-Field-Communication NFC, Bluetooth und/oder Bluetooth Low Energy, sein.

Der Merkmalsvektor kann physikalische Eigenschaften des Anfrage-Funksignals und/oder des Antwort-Funksignals enthalten. Der Merkmalsvektor kann weiterhin eine eindeutige Kennung des Objekts und/oder des Fahrzeugs umfassen. Die vorgegebenen Merkmalsvektoren können bei einem Einmessen des Fahrzeugs bestimmt und in einem Steuergerät des Fahrzeugs gespeichert werden. Die vorgegebenen Merkmalsvektoren können anhand eines Rasters ermittelt werden. Für jeden Punkt des Rasters kann ein Merkmalsvektor ermittelt werden. Das Raster kann in einem Koordinatensystem angeordnet sein. Somit kann für jeden Punkt des Rasters ein eindeutiger Ort bzw. eine eindeutige Position in dem Koordinatensystem angegeben werden. Der Ursprung des Koordinatensystems kann relativ, z.B. in Abhängigkeit einer Reichweite der Funksignale des Fahrzeugs, bestimmt werden.

Gemäß der Erfindung umfasst das Verfahren weiterhin, falls ein Merkmalsvektor aus der Menge der vorgegebenen, eindeutigen Merkmalsvektoren mit dem ermittelten Merkmalsvektor übereinstimmt, ein Setzen des Ortes des Objekts als den Ort, der mit dem bestimmten Merkmalsvektor verknüpft ist. Das Verfahrer umfasst weiterhin, falls ein Merkmalsvektor aus der Menge der vorgegebenen, eindeutigen Merkmalsvektoren nicht mit dem ermittelten Merkmalsvektor übereinstimmt, ein Bestimmen von mindestens zwei Merkmalsvektoren aus der Menge der Merkmalsvektoren, deren Merkmale am ähnlichsten zu den Merkmalen des ermittelten Merkmalsvektors sind und ein Setzen des Ortes des Objekts als eine Strecke, die zwischen den Orten liegt, die mit den mindestens zwei bestimmten Merkmalsvektoren verknüpft sind. Hiermit kann effizient einem ermittelten Merkmalsvektor ein Ort in dem Raster zugewiesen werden. Der Ort in dem Raster kann eine eindeutige Position sein, falls der ermittelte Merkmalsvektor identisch oder nahezu identisch mit einem vorgegebenen Merkmalsvektor ist oder eine Strecke zwischen zwei Orten in dem Raster, falls der ermittelte Merkmalsvektor keinem vorgegebenen Merkmalsvektor entspricht sondern zwischen zwei vorgegeben Merkmalsvektoren des Rasters liegt.

Gemäß einer weiteren, vorteilhaften Ausgestaltung kann das Berechnen des Bewegungsvektors ausgeführt werden, falls der erste Ort und der zweite Ort des Objekts unterschiedlich sind. Hiermit können die benötigten Rechenressourcen zum Bestimmen des Bewegungsvektors verringert werden, da nur dann ein Bewegungsvektor berechnet wird, wenn eine Bewegung vorhanden ist, d.h. der erste Ort und der zweite Ort des Objekts sich unterscheiden. Bleibt der Nutzer des Fahrzeugs bzw. der Träger des Objekt im Umfeld des Fahrzeug stehen und bewegt sich nicht weiter, wird kein Bewegungsvektor berechnet. Die Effizienz der Berechnung des Bewegungsvektors kann somit verbessert werden.

Gemäß einer weiteren, vorteilhaften Ausgestaltung kann das Verfahren weiterhin, falls ein Schnittpunkt zwischen dem Bewegungsvektor und einem virtuellen Fahrzeugbereich vorhanden ist, ein Bestimmen einer Entfernung zwischen dem zweiten Ort des Objekts und dem virtuellen Fahrzeugbereich, und, falls die Entfernung einen ersten vorgegeben Schwellwert unterschreitet, ein Auslösen einer ersten Fahrzeugfunktion umfassen. Hiermit können flexibel Fahrzeugfunktionen in Abhängigkeit der Entfernung des Objekts ausgelöst werden.

Gemäß einer weiteren, vorteilhaften Ausgestaltung kann das Verfahren weiterhin, falls die Entfernung einen zweiten vorgegebenen Schwellwert unterschreitet, ein Auslösen einer zweiten Fahrzeugfunktion umfassen. Hiermit können flexibel Fahrzeugfunktionen in Abhängigkeit der Entfernung des Objekts ausgelöst werden.

Gemäß einer weiteren, vorteilhaften Ausgestaltung kann das Verfahren weiterhin, falls kein Schnittpunkt vorhanden ist bzw. bestimmt werden kann, ein Unterdrücken eines Auslösens einer Fahrzeugfunktion, wobei die Fahrzeugfunktion vorzugsweise eine erste und/oder eine zweite Fahrzeugfunktion ist, umfassen. Hiermit können das Auslösen von Fahrzeugfunktionen effizient verbessert werden. Nur wenn der Nutzer des Fahrzeugs bzw. der Träger des Objekts sich dem Fahrzeug nähert, d.h. ein Schnitt Punkt vorhanden ist, wird eine Fahrzeugfunktion ausgelöst. Andernfalls, d.h. falls kein Schnittpunkt vorhanden ist, geht das Fahrzeug davon aus, dass der Nutzer des Fahrzeugs bzw. der Träger des Objekts an dem Fahrzeug vorbeigeht und unterdrückt das Auslösen einer oder mehrerer Fahrzeugfunktionen.

Gemäß einer weiteren, vorteilhaften Ausgestaltung kann das Verfahren weiterhin, falls kein Schnittpunkt vorhanden ist und eine erste und/oder eine zweite Fahrzeugfunktion ausgelöst ist, ein Abschalten der ersten und/oder der zweiten ausgelösten Fahrzeugfunktion, und ein Unterdrücken eines Auslösens einer weiteren Fahrzeugfunktion umfassen. Hiermit kann effizient die Sicherheit des Fahrzeugs erhöht werden, in dem das Fahrzeug die bereits aktivierten bzw. ausgelösten Fahrzeugfunktionen deaktiviert und verhindert, weitere Fahrzeugfunktionen auszulösen, wenn das Fahrzeug erkennt, dass der Nutzer des Fahrzeugs bzw. der Träger des Objekts an dem Fahrzeug vorbeigeht und/oder sich dem Fahrzeug wieder entfernt. Weiterhin kann effizient die Anzahl der ausgelösten Fahrzeugfunktionen und somit der Energieverbrauch für die Fahrzeugfunktionen verringert werden.

Gemäß einer weiteren, vorteilhaften Ausgestaltung kann das Verfahren weiterhin ein Bestimmen einer Entfernung zwischen dem zweiten Ort des Objekts und dem virtuellen Fahrzeugbereich und, falls die Entfernung einen dritten vorgegebenen Schwellwert unterschreitet, wobei der dritte vorgegebene Schwellwert kleiner als der ersten und der zweite vorgegebene Schwellwert ist, und kein Schnittpunkt vorhanden ist, ein Auslösen der zweiten Fahrzeugfunktion umfassen. Hiermit kann eine Fahrzeugfunktion auch ohne vorhandenen Schnittpunkt ausgelöst werden, falls die Entfernung zwischen dem Nutzer des Fahrzeugs bzw. dem Träger des Objekts und dem Fahrzeug sehr klein, z.B. im Bereich einiger weniger Zentimeter ist. Falls der Nutzer des Fahrzeugs sich beispielsweise parallel zu dem Fahrzeug in einer engen Umgebung, z.B. in einem Parkhaus, einem Parkplatz oder einer Tiefgarage, bewegt und somit kein Schnittpunkt des Bewegungsvektors mit dem virtuellen Fahrzeugbereich bestimmt werden kann, kann trotzdem ein Auslösen der Fahrzeugfunktion erfolgen. Die Funktionssicherheit des Verfahrens kann somit erhöht werden.

Gemäß einer weiteren, vorteilhaften Ausgestaltung kann die erste Fahrzeugfunktion eine visuelle und/oder audio-visuelle Steuerung von Komponenten des Fahrzeugs, und/oder die zweite Fahrzeugfunktion ein Entsperren eines Fahrzeugzugangs umfassen. Hiermit können flexibel verschiedene Fahrzeugfunktionen miteinander kombiniert werden. Beispielsweise können Fahrzeugfunktionen mit Lichteffekten und das Entsperren des Fahrzeugs unterschiedlich gesteuert werden.

Gemäß einem weiteren Aspekt zeichnet sich die Erfindung aus durch ein System zum automatischen Auslösen von Fahrzeugfunktionen eines Fahrzeugs, wobei das System dazu eingerichtet ist, das oben beschriebene Verfahren auszuführen.

Gemäß einem weiteren Aspekt zeichnet sich die Erfindung aus durch ein Fahrzeug umfassend das System zum automatischen Auslösen von Fahrzeugfunktionen eines Fahrzeugs, wobei das System dazu eingerichtet ist, das oben beschriebene Verfahren auszuführen.

Weitere Merkmale der Erfindung ergeben sich aus den Ansprüchen, den Figuren und der Figurenbeschreibung. Alle vorstehend in der Beschreibung genannten Merkmale und Merkmalkombinationen sowie die nachfolgend in der Figurenbeschreibung genannten und/oder in den Figuren allein gezeigten Merkmale und Merkmalkombinationen sind nicht nur in der jeweils angegebenen Kombination, sondern auch in anderen Kombinationen oder aber in Alleinstellung verwendbar.

Im Folgenden wird anhand der beigefügten Zeichnungen ein bevorzugtes Ausführungsbeispiel der Erfindung beschrieben. Daraus ergeben sich weitere Details, bevorzugte Ausgestaltungen und Weiterbildungen der Erfindung. Im Einzelnen zeigen schematisch
Fig. 1 ein beispielhaftes Ablaufdiagramm eines Verfahrens zum automatischen Auslösen einer Fahrzeugfunktion, und
Fig. 2 ein beispielhaftes Szenario für ein automatisches Auslösen und ein Nichtauslösen einer Fahrzeugfunktion eines Fahrzeugs.

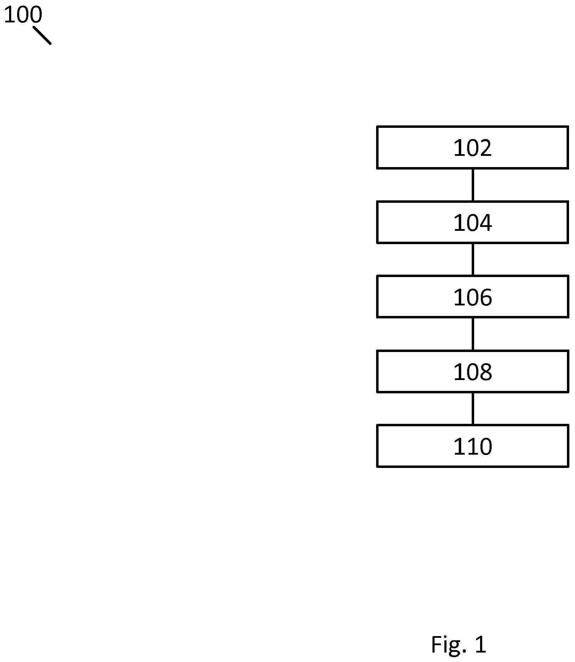

Im Detail zeigt Fig. 1 ein beispielhaftes Ablaufdiagramm eines Verfahrens 100 zum automatischen Auslösen einer oder mehrerer Fahrzeugfunktionen eines Fahrzeugs, insbesondere beim Annähern eines Objekts an das Fahrzeug. Das automatische Auslösen kann ein Aktivieren oder ein Deaktivieren einer Fahrzeugfunktion umfassen. Die Fahrzeugfunktionen können ein Entriegeln bzw. ein Verriegeln eines Fahrzeugzugangs, z.B. einer oder mehrerer Fahrzeugtüren, eines Kofferraums, eines Tankdeckels, einer Motorhaube, und/oder eines Schiebe-/Panoramadachs, und eine visuelle oder eine audio-visuelle Lichtinszenierung des Fahrzeugs umfassen. Für die Lichtinszenierung kann ein Steuergerät einen oder mehrere Steuerbefehle an Licht- und/oder Audiokomponenten des Fahrzeugs senden, um die entsprechende Lichtinszenierung zu aktivieren oder zu deaktivieren. Das Objekt kann ein Fahrzeugschlüssel und/oder ein Smart-Device sein. Ein Smart-Device kann ein Smartphone, eine Smartcard, eine intelligente Uhr, eine intelligente Brille, und/oder ein intelligentes Kleidungsstück sein.

Eine Zone oder ein Bereich in einem Umfeld des Fahrzeugs, im Folgenden auch Fahrzeugbereich genannt, kann in ein Raster unterteilt werden. Das Raster kann regelmäßig sein und/oder anhand eines Koordinatensystems ausgerichtet sein. Einzelne Punkte des Rasters können über Koordinaten des Koordinatensystems eindeutig adressiert werden. Ein Punkt des Rasters kann einem eindeutigen Ort relativ zu einem Ursprung des Koordinatensystems und/oder relativ zu einer Position des Fahrzeugs spezifiziert werden. Das Raster kann unmittelbar oder mittelbar an einen virtuellen Fahrzeugbereich des Fahrzeugs angrenzen.

Das Verfahren 100 zum Auslösen einer Fahrzeugfunktion eines Fahrzeugs kann einen ersten Ort eines Objekts zu einem ersten Zeitpunkt in dem Umfeld des Fahrzeugs bestimmen 102. Um den Ort des Objekts zu bestimmen kann das Fahrzeug beispielsweise mithilfe einer Schlüsselsuche das Objekt in dem Umfeld erkennen und den Ort des Objekts mittels des Rasters bestimmen. Analog dazu kann das Verfahren einen zweiten Ort des Objekts zu einem zweiten Zeitpunkt in dem Umfeld des Fahrzeugs bestimmen 104. Durch das Bestimmen eines ersten Ortes und eines zweiten Ortes des Objekts zu unterschiedlichen Zeitpunkten kann ein Bewegungsvektor berechnet werden 106. Der Bewegungsvektor kann eine Bewegungsrichtung des Objekts bzw. des Trägers des Objekts anzeigen. Für das Berechnen des Bewegungsvektors können mehr als zwei ermittelte Orte des Objekts, z.B. 3, 4, 5, 6, usw. Orte, verwendet werden.

Für einen berechneten Bewegungsvektor kann das Verfahren 100 einen Schnittpunkt zwischen dem Bewegungsvektor und einem virtuellen Fahrzeugbereich bestimmen 108, sofern ein Schnittpunkt vorhanden ist. Der virtuelle Fahrzeugbereich entspricht mindestens teilweise einem realen Fahrzeugbereich, der durch die Außenmaße des Fahrzeugs festgelegt sein kann. Vorzugsweise hat der virtuelle Fahrzeugbereich eine rechteckige Form. Vorzugsweise grenzt der virtuelle Fahrzeugbereich an das Raster in dem Umfeld des Fahrzeugs an. Die rechteckige Form des virtuellen Fahrzeugbereichs kann die Berechnung eines Schnittpunkts vereinfachen. Falls ein Schnittpunkt zwischen dem Bewegungsvektor und dem virtuellen Fahrzeugbereich vorhanden ist, kann eine Fahrzeugfunktion des Fahrzeugs ausgelöst werden 110. In anderen Worten, falls ein Schnittpunkt zwischen dem Bewegungsvektor und dem virtuellen Fahrzeugbereich bestimmt wurde, nimmt das Verfahren an, dass der Nutzer des Fahrzeugs bzw. der Träger des Objekts das Fahrzeug beabsichtigt, das Fahrzeug zu nutzen. Entsprechend kann das Fahrzeug eine oder mehrere dazugehörige Fahrzeugfunktionen auslösen 110.

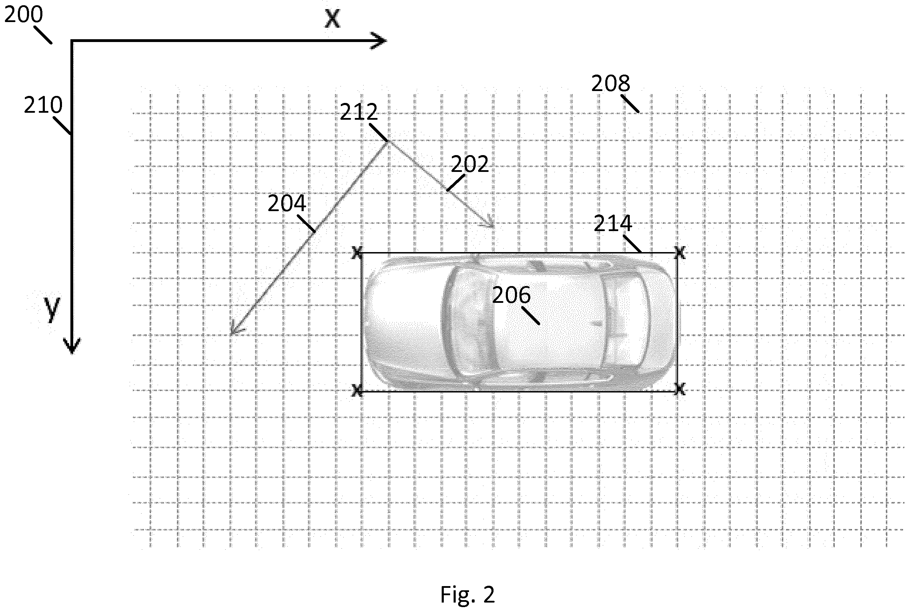

Im Detail zeigt **Fig. 2** ein beispielhaftes Szenario 200 für ein automatisches Auslösen und ein Nichtauslösen einer Fahrzeugfunktion eines Fahrzeugs in Abhängigkeit eines jeweiligen Bewegungsvektors 202, 204. Wie in Fig. 2 abgebildet, kann eine Zone um das Fahrzeug 206 in ein Raster 208, das beispielsweise anhand eines Koordinatensystems 210 ausgerichtet sein kann, unterteilt werden. Für jeden Punkt des Rasters 208 innerhalb des Koordinatensystems 210 kann ein eindeutiger Merkmalsvektor definiert sein. Innerhalb des Rasters kann das Fahrzeug 206 einen Ort 212 des Objekts, z.B. eines Fahrzeugschlüssels, ermitteln. Beispielsweise kann ein Polling von Low-Frequency Antennen des Fahrzeugs 206 verwenden werden, um den Ort 212 des Objekts zu ermitteln. Das Polling kann kontinuierlich durchgeführt werden, um eine Bewegungsrichtung des Objekts 212 verfolgen zu können. Anhand der ermittelten Orte 212 des Objekts innerhalb des Rasters 208 kann ein Bewegungsvektor 202, 204 berechnet werden, der die genauen Bewegungsrichtung des Objekts 212 darstellt. Mittels des Bewegungsvektors 202, 204 kann bestimmt werden ob der Nutzer des Fahrzeugs bzw. Träger des Objekts sich tatsächlich dem Fahrzeug 206 nähert, wie beispielsweise der Bewegungsvektor 202 anzeigt, oder nur an dem Fahrzeug 206 verbeiläuft, wie beispielsweise durch den Bewegungsvektor 204 dargestellt ist.

In Fig. 2 ist der reale Fahrzeugbereich des Fahrzeugs 206 durch einen virtuellen Fahrzeugbereich 214 abstrahiert dargestellt. Der virtuelle Fahrzeugbereich 214 kann beispielsweise eine rechteckige Form aufweisen und den realen Fahrzeugbereich vollständig umschließen. Die Eckpunkte des virtuellen Fahrzeugbereichs sind dabei Endpunkte von Strecken, die die jeweiligen Eckpunkte verbinden. Ein Annähern des Objekts an das Fahrzeug kann dann vorliegen, wenn der berechnete Bewegungsvektor, z.B. Bewegungsvektor 202, eine der die Eckpunkte des virtuellen Fahrzeugbereichs verbindenden Strecken schneidet. Das Fahrzeug kann den ermittelten Schnittpunkt verwenden, um eine Fahrzeugfunktion auszulösen.

Vorteilhafterweise führt das Fahrzeug nur dann eine Fahrzeugfunktion aus, wenn der Bewegungsvektor anzeigt, dass sich der Nutzer des Fahrzeugs dem Fahrzeug nähert und nicht nur daran vorbeiläuft. Ungewollte Fahrzeugfunktionen können somit effizient verhindert werden und der Energieverbrauch für das Auslösen bzw. Ausführen von Fahrzeugfunktionen effizient reduziert werden. Weiterhin kann genauer erkannt werden, an welchem Punkt des Fahrzeugs der Nutzer des Fahrzeugs voraussichtlich ankommen wird. Beispielsweise kann durch die Bestimmung des Schnittpunkts erkannt werden, dass sich der Nutzer des Fahrzeugs der Fahrertür oder der hinteren Tür auf der Fahrerseite nähert. Abhängig davon, an welcher Tür der Nutzer ankommen wird, kann das Fahrzeug unterschiedliche Fahrzeugfunktionen ausführen. Das Fahrzeug kann somit individueller und präziser auf das Annähern des Nutzers des Fahrzeugs reagieren. Ferner kann dadurch die Sicherheit des Fahrzeugs erhöht werden, da nur Fahrzeugfunktionen ausgeführt werden, die individuell auf die Bewegung des Nutzers zugeschnitten sind. Beispielsweise kann ein unnötiges Entsperren weiterer Türen des Fahrzeugs somit verhindert werden, die ein Einsteigen weiterer Personen ermöglichen könnte.

### Bezugszeichenliste

- 100: Verfahren
- 102: Ermitteln eines ersten Ortes eines Objekts
- 104: Ermitteln eines zweiten Ortes des Objekts
- 106: Berechnen eines Bewegungsvektors
- 108: Bestimmen eines Schnittpunkts
- 110: Auslösen eines Fahrzeugfunktion
- 200: Szenario
- 202: Bewegungsvektor
- 204: Bewegungsvektor
- 206: Fahrzeug
- 208: Raster
- 210: Koordinatensystem
- 212: Ort des Objekts
- 214: virtueller Fahrzeugbereich

## Patentansprüche

1. Verfahren (100) zum automatischen Auslösen einer Fahrzeugfunktion eines Fahrzeugs, das Verfahren umfassend:
Ermitteln (102) eines ersten Ortes eines Objekts zu einem ersten Zeitpunkt in einem Umfeld eines Fahrzeugs;
Ermitteln (104) eines zweiten Ortes des Objekts zu einem zweiten Zeitpunkt in dem Umfeld des Fahrzeugs,
wobei das Ermitteln des ersten Ortes des Objekts und/oder des zweiten Ortes des Objekts in dem Umfeld des Fahrzeugs umfasst:
Senden eines Anfrage-Funksignals an das Objekt;
Falls das Objekt in dem Umfeld des Fahrzeugs ist:
Empfangen eines Antwort-Funksignals des Objekts;
Ermitteln eines Merkmalsvektors in Abhängigkeit des Antwort-Funksignals, wobei der Merkmalsvektor wenigstens eine physikalische Eigenschaft des Antwort-Funksignals und/oder des Anfrage-Funksignals umfasst;
Bestimmen eines oder mehrerer Merkmalsvektoren aus einer Menge vorgegebener, eindeutiger Merkmalsvektoren in Abhängigkeit des ermittelten Merkmalsvektors,
wobei ein Merkmalsvektor aus der Menge vorgegebener Merkmalsvektoren mit einem eindeutigen Ort in einem vorgegebenen Raster im Umfeld des Fahrzeugs verknüpft ist;
Falls ein Merkmalsvektor aus der Menge der vorgegebenen, eindeutigen Merkmalsvektoren mit dem ermittelten Merkmalsvektor übereinstimmt:
Setzen des jeweiligen Ortes des Objekts als den Ort, der mit dem bestimmten Merkmalsvektor verknüpft ist;
Falls ein Merkmalsvektor aus der Menge der vorgegebenen, eindeutigen Merkmalsvektoren nicht mit dem ermittelten Merkmalsvektor übereinstimmt:
Bestimmen von mindestens zwei Merkmalsvektoren aus der Menge der Merkmalsvektoren, deren Merkmale am ähnlichsten zu den Merkmalen des ermittelten Merkmalsvektors sind; und
Setzen des Ortes des Objekts als eine Strecke, die zwischen den Orten liegt, die mit den mindestens zwei bestimmten Merkmalsvektoren verknüpft sind;
Berechnen (106) eines Bewegungsvektors in Abhängigkeit des ermittelten ersten Ortes des Objekts zu dem ersten Zeitpunkt und des ermittelten zweiten Ortes des Objekts zu dem zweiten Zeitpunkt;
Bestimmen (108) eines Schnittpunkts zwischen dem Bewegungsvektor und einem virtuellen Fahrzeugbereich, wobei der virtuelle Fahrzeugbereich mindestens teilweise einem realen Fahrzeugbereich des Fahrzeugs entspricht; und
Falls ein Schnittpunkt zwischen dem Bewegungsvektor und einem virtuellen Fahrzeugbereich vorhanden ist:
Auslösen (110) einer Fahrzeugfunktion des Fahrzeugs.

2. Verfahren nach Anspruch 1, wobei die Fahrzeugfunktion durch das Objekt ausgelöst wird; und/oder
wobei die Fahrzeugfunktion in Abhängigkeit einer Position des Schnittpunkts mit dem virtuellen Fahrzeugbereich ausgelöst wird.

3. Verfahren nach einem der vorhergehenden Ansprüche, wobei der erste Ort des Objekts und/oder der zweite Ort des Objekts relativ zu einer Position des Fahrzeugs ermittelt werden; und/oder
wobei der erste Ort des Objekts und/oder der zweite Ort des Objekts relativ zu dem virtuellen Fahrzeugbereich des Fahrzeugs ermittelt werden.

4. Verfahren nach einem der vorhergehenden Ansprüche, wobei die Fahrzeugfunktion in Abhängigkeit des ersten Ortes des Objekts und/oder in Abhängigkeit des zweiten Ortes des Objekts ausgelöst wird.

5. Verfahren nach einem der vorhergehenden Ansprüche, wobei das Berechnen des Bewegungsvektors ausgeführt wird, falls der erste Ort und der zweite Ort des Objekts unterschiedlich sind.

6. Verfahren nach einem der vorhergehenden Ansprüche, wobei das Verfahren weiterhin umfasst:
Falls ein Schnittpunkt zwischen dem Bewegungsvektor und einem virtuellen Fahrzeugbereich vorhanden ist:
Bestimmen einer Entfernung zwischen dem zweiten Ort des Objekts und dem virtuellen Fahrzeugbereich;
Falls die Entfernung einen ersten vorgegeben Schwellwert unterschreitet:
Auslösen einer ersten Fahrzeugfunktion.

7. Verfahren nach Anspruch 6, das Verfahren weiterhin umfassend:
Falls die Entfernung einen zweiten vorgegebenen Schwellwert unterschreitet:
Auslösen einer zweiten Fahrzeugfunktion.

8. Verfahren nach einem der vorhergehenden Ansprüche, das Verfahren weiterhin umfassend:
Falls kein Schnittpunkt vorhanden ist,
Unterdrücken eines Auslösens einer Fahrzeugfunktion,
wobei die Fahrzeugfunktion vorzugsweise eine erste und/oder eine zweite Fahrzeugfunktion ist.

9. Verfahren nach einem der vorhergehenden Ansprüche, das Verfahren weiterhin umfassend:
Falls kein Schnittpunkt vorhanden ist und eine erste und/oder eine zweite Fahrzeugfunktion ausgelöst ist,
Abschalten der ersten und/oder der zweiten ausgelösten Fahrzeugfunktion; und Unterdrücken eines Auslösens einer weiteren Fahrzeugfunktion.

10. Verfahren nach einem der vorhergehenden Ansprüche, wobei das Verfahren weiterhin umfasst:
Bestimmen einer Entfernung zwischen dem zweiten Ort des Objekts und dem virtuellen Fahrzeugbereich;
Falls die Entfernung einen dritten vorgegebenen Schwellwert unterschreitet, wobei der dritte vorgegebene Schwellwert kleiner als der ersten und der zweite vorgegebene Schwellwert ist, und kein Schnittpunkt vorhanden ist,
Auslösen der zweiten Fahrzeugfunktion.

11. Verfahren nach einem der vorhergehenden Ansprüche, wobei die erste Fahrzeugfunktion eine visuelle und/oder audio-visuelle Steuerung von Komponenten des Fahrzeugs umfasst; und/oder wobei die zweite Fahrzeugfunktion ein Entsperren eines Fahrzeugzugangs umfasst.

12. System zum automatischen Auslösen von Fahrzeugfunktionen eines Fahrzeugs, wobei das System dazu eingerichtet ist, das Verfahren nach einem der Ansprüche 1 bis 11 auszuführen.

13. Fahrzeug umfassend das System zum automatischen Auslösen von Fahrzeugfunktionen eines Fahrzeugs, wobei das System dazu eingerichtet ist, das Verfahren nach einem der Ansprüche 1 bis 11 auszuführen.

## Claims

1. Method (100) for automatic initiation of a vehicle function of a vehicle, the method comprising:
ascertaining (102) a first location of an object at a first time in a surrounding area of a vehicle;
ascertaining (104) a second location of the object at a second time in the surrounding area of the vehicle;
wherein ascertaining the first location of the object and/or the second location of the object in the surrounding area of the vehicle comprises:
transmitting a query radio signal to the object;
if the object is in the surrounding area of the vehicle:
receiving a response radio signal of the object;
ascertaining a feature vector depending on the response radio signal, wherein the feature vector comprises at least one physical property of the response radio signal and/or of the query radio signal;
determining one or more feature vectors from a set of predetermined, unique feature vectors depending on the ascertained feature vector,
wherein a feature vector from the set of predetermined feature vectors is linked to a unique location in a predetermined grid in the surrounding area of the vehicle;
if a feature vector from the set of the predetermined, unique feature vectors corresponds to the ascertained feature vector:
setting the respective location of the object as the location that is linked to the determined feature vector;
if a feature vector from the set of the predetermined,
unique feature vectors does not correspond to the ascertained feature vector:
determining at least two feature vectors from the set of the feature vectors whose features are the most similar to the features of the ascertained feature vector; and
setting the location of the object as a line segment lying between the locations that are linked to the at least two determined feature vectors;
calculating (106) a movement vector depending on the ascertained first location of the object at the first time and the ascertained second location of the object at the second time;
determining (108) a point of intersection between the movement vector and a virtual vehicle region, wherein the virtual vehicle region corresponds at least in part to a real vehicle region of the vehicle; and
if a point of intersection between the movement vector and a virtual vehicle region is present:
initiating (110) a vehicle function of the vehicle.

2. Method according to Claim 1, wherein the vehicle function is initiated by the object; and/or
wherein the vehicle function is initiated depending on a position of the point of intersection with the virtual vehicle region.

3. Method according to either of the preceding claims, wherein the first location of the object and/or the second location of the object are ascertained relative to a position of the vehicle; and/or
wherein the first location of the object and/or the second location of the object are ascertained relative to the virtual vehicle region of the vehicle.

4. Method according to any one of the preceding claims, wherein the vehicle function is initiated depending on the first location of the object and/or depending on the second location of the object.

5. Method according to any one of the preceding claims, wherein the movement vector is calculated should the first location and the second location of the object differ.

6. Method according to any one of the preceding claims, wherein the method furthermore comprises:
if a point of intersection between the movement vector and a virtual vehicle region is present:
determining a distance between the second location of the object and the virtual vehicle region;
if the distance drops below a first predetermined threshold value:
initiating a first vehicle function.

7. Method according to Claim 6, the method furthermore comprising:
if the distance drops below a second predetermined threshold value:
initiating a second vehicle function.

8. Method according to any one of the preceding claims, the method furthermore comprising:
if no point of intersection is present,
suppressing an initiation of a vehicle function,
wherein the vehicle function is preferably a first and/or
a second vehicle function.

9. Method according to any one of the preceding claims, the method furthermore comprising:
if no point of intersection is present and a first and/or
a second vehicle function is initiated,
deactivating the first and/or the second initiated vehicle function; and
suppressing an initiation of a further vehicle function.

10. Method according to any one of the preceding claims, wherein the method furthermore comprises:
determining a distance between the second location of the object and the virtual vehicle region;
if the distance drops below a third predetermined threshold value, wherein the third predetermined threshold value is less than the first and the second predetermined threshold value, and no point of intersection is present,
initiating the second vehicle function.

11. Method according to any one of the preceding claims, wherein the first vehicle function comprises a visual and/or audio-visual control of components of the vehicle; and/or wherein the second vehicle function comprises an unlocking of a vehicle access.

12. System for automatic initiation of vehicle functions of a vehicle, wherein the system is configured to carry out the method according to any one of Claims 1 to 11.

13. Vehicle comprising the system for automatic initiation of vehicle functions of a vehicle, wherein the system is configured to carry out the method according to any one of Claims 1 to 11.

## Revendications

1. Procédé (100) permettant de déclencher automatiquement une fonction de véhicule d'un véhicule, le procédé comprenant :
l'établissement (102) d'un premier emplacement d'un objet à un premier instant dans un environnement d'un véhicule ;
l'établissement (104) d'un deuxième emplacement de l'objet à un deuxième instant dans l'environnement du véhicule,
l'établissement du premier emplacement de l'objet et/ou du deuxième emplacement de l'objet dans l'environnement du véhicule comprenant :
l'envoi à l'objet d'un signal radio de demande ;
si l'objet se trouve dans l'environnement du véhicule :
la réception d'un signal radio de réponse de l'objet ;
l'établissement un vecteur de caractéristique en fonction du signal radio de réponse, le vecteur de caractéristique comprenant au moins une propriété physique du signal radio de réponse et/ou du signal radio de demande ;
la détermination d'un ou de plusieurs vecteurs de caractéristique parmi un ensemble de vecteurs de caractéristique univoques, prédéfinis, en fonction du vecteur de caractéristique établi,
un vecteur de caractéristique parmi l'ensemble de vecteurs de caractéristique prédéfinis étant associé à un emplacement univoque dans une trame prédéfinie dans l'environnement du véhicule ;
si un vecteur de caractéristique parmi l'ensemble de vecteurs de caractéristique univoques, prédéfinis, coïncide avec le vecteur de caractéristique établi :
la définition de l'emplacement respectif de l'objet comme l'emplacement qui est associé au vecteur de caractéristique déterminé ;
si un vecteur de caractéristique parmi l'ensemble de vecteurs de caractéristique univoques, prédéfinis, ne coïncide pas avec le vecteur de caractéristique établi :
la détermination d'au moins deux vecteurs de caractéristique parmi l'ensemble de vecteurs de caractéristique dont les caractéristiques sont les plus proches des caractéristiques du vecteur de caractéristique établi; et
la définition de l'emplacement de l'objet comme un trajet qui est situé entre les emplacements qui sont associés auxdits au moins deux vecteurs de caractéristique déterminés ;
le calcul (106) d'un vecteur de mouvement en fonction du premier emplacement établi de l'objet au premier instant et du deuxième emplacement établi de l'objet au deuxième instant ;
la détermination (108) d'un point d'intersection entre le vecteur de mouvement et une zone de véhicule virtuelle, la zone de véhicule virtuelle correspondant au moins en partie à une zone de véhicule réelle du véhicule ; et
si un point d'intersection existe entre le vecteur de mouvement et une zone de véhicule virtuelle :
le déclenchement (110) d'une fonction de véhicule du véhicule.

2. Procédé selon la revendication 1, dans lequel la fonction de véhicule est déclenché par l'objet ; et/ou dans lequel la fonction de véhicule est déclenchée en fonction d'une position du point d'intersection avec la zone de véhicule virtuelle.

3. Procédé selon l'une quelconque des revendications précédentes, dans lequel le premier emplacement de l'objet et/ou le deuxième emplacement de l'objet sont établis par rapport à une position du véhicule ; et/ou le premier emplacement de l'objet et/ou le deuxième emplacement de l'objet étant établis par rapport à la zone de véhicule virtuelle du véhicule.

4. Procédé selon l'une quelconque des revendications précédentes, dans lequel la fonction de véhicule est déclenchée en fonction du premier emplacement de l'objet et/ou en fonction du deuxième emplacement de l'objet.

5. Procédé selon l'une quelconque des revendications précédentes, dans lequel le calcul du vecteur de mouvement est effectué si le premier emplacement et le deuxième emplacement de l'objet sont différents.

6. Procédé selon l'une quelconque des revendications précédentes, dans lequel le procédé comprend en outre :
si un point d'intersection existe entre le vecteur de mouvement et une zone de véhicule virtuelle :
la détermination d'une distance entre le deuxième emplacement de l'objet et la zone de véhicule virtuelle ;
si la distance est inférieure à une première valeur seuil prédéfinie :
le déclenchement d'une première fonction de véhicule.

7. Procédé selon la revendication 6, le procédé comprenant en outre :
si la distance est inférieure à une deuxième valeur seuil prédéfinie :
le déclenchement d'une deuxième fonction de véhicule.

8. Procédé selon l'une quelconque des revendications précédentes, le procédé comprenant en outre :
s'il n'existe aucun point d'intersection,
la suppression d'un déclenchement d'une fonction de véhicule,
la fonction de véhicule étant de préférence une première et/ou une deuxième fonction de véhicule.

9. Procédé selon l'une quelconque des revendications précédentes, le procédé comprenant en outre :
s'il n'existe aucun point d'intersection et une première et/ou une deuxième fonction de véhicule est/sont déclenchée(s),
l'arrêt de la première et/ou de la deuxième fonction de véhicule déclenchée ; et
la suppression d'un déclenchement d'une autre fonction de véhicule.

10. Procédé selon l'une quelconque des revendications précédentes, le procédé comprenant en outre :
la détermination d'une distance entre le deuxième emplacement de l'objet et la zone de véhicule virtuelle ;
si la distance est inférieure à une troisième valeur seuil prédéfinie, la troisième valeur seuil prédéfinie étant inférieure à la première et à la deuxième valeur seuil prédéfinie, et il n'existe aucun point d'intersection,
le déclenchement de la deuxième fonction de véhicule.

11. Procédé selon l'une quelconque des revendications précédentes, dans lequel la première fonction de véhicule comprend une commande visuelle et/ou audiovisuelle de composants du véhicule ; et/ou dans lequel la deuxième fonction de véhicule comprend un déverrouillage d'un accès au véhicule.

12. Système de déclenchement automatique de fonctions de véhicule, le système étant aménagé pour exécuter le procédé selon l'une quelconque des revendications 1 à 11.

13. Véhicule, comprenant le système de déclenchement automatique de fonctions de véhicule d'un véhicule, le système étant aménagé pour exécuter le procédé selon l'une quelconque des revendications 1 à 11.
